# FASCICULE DE BREVET EUROPEEN

(11) **EP 0 635 704 B1**
(45) Date de publication et mention de la délivrance du brevet: **02.05.1997**
(21) Numéro de dépôt: 94401683.1
(22) Date de dépôt: 21.07.1994
(51) Int. Cl.: G01J 1/42

(54) **Capteur de rayonnement ultra-violet sélectif et à grand champ**
Trennscharfer UV-Weitwinkelempfänger
Selecting wide angle probe for UV-radiation

(30) Priorité: 22.07.1993 FR 9309048
(43) Date de publication de la demande: 25.01.1995
(73) Titulaire: MATRA DEFENSE, 75116 Paris (FR); SFIM OPTRONIQUE POUR LA DEFENSE ET LE SPATIAL, 78146 Vélizy-Villacoublay (FR)
(72) Inventeur: Malherbe, André, F-95300 Pontoise (FR)
(74) Mandataire: Fort, Jacques

(56) Documents cités:
- EP-A- 0 157 644
- EP-A- 0 355 310
- DE-A- 4 000 848
- PROCEEDINGS OF THE SPIE, vol. 1158, 1989, pp. 346-350; J.C. SIMONS : 'Ultraviolet narrowband filters with both high transmittance and superior rejection for imaging situations'
- PROCEEDINGS OF THE SPIE, vol. 1158, 1989, pp. 336-344; C.B. JOHNSON et al.: 'Images from an ultraviolet solar-blind photon-counting camera'

## Description

La présente invention a pour objet un détecteur de rayonnement ultra-violet permettant de repérer en plein jour une source émettant dans la plage d'absorption, dite "solar blind", allant de 200 à 290 nanomètres, où l'énergie solaire est très fortement atténuée par l'absorption due à la couche d'ozone.

L'invention trouve des applications particulièrement importantes, bien que non-exclusives, dans le domaine des capteurs destinés à être montés sur des véhicules, et notamment des avions, pour déceler la flamme de départ d'engins ou de fusées. Une autre application consiste à détecter des gaz polluants.

La plupart des capteurs destinés à avertir du tir d'un engin auto-propulsé existant à l'heure actuelle sont sensibles à l'émission infra-rouge de la flamme. Ils sont coûteux et ils provoquent un taux élevé de fausses alarmes. On a déjà proposé de leur substituer des capteurs dans l'ultra-violet comportent un détecteur ayant une sensibilité qui décroît rapidement au-delà de 300 nm. Le document EP-A-0 355 310 décrit par exemple un capteur ayant un détecteur à convertisseur d'image, amplificateur de brillance ou tube SIT associé à un filtre, au moins pour un emploi de jour.

Malheureusement leur sensibilité résiduelle au-delà de cette limite, qui est celle de la plage d'absorption par l'ozone, reste trop élevée, d'autant plus que le rayonnement solaire présente un maximum au-delà de 300 nm, vers 550 nm. Pour qu'un tel capteur soit utilisable, il doit être suffisamment sélectif pour que la contribution de la source ultraviolette à détecter au signal de sortie soit supérieure au bruit de fond. Cela implique d'associer le capteur à des moyens de filtrage dont la transparence au-delà de 300 nm, dans un domaine s'étendant au moins jusqu'au maximum du spectre solaire et du domaine de sensibilité résiduelle du détecteur, ne dépasse pas 10⁻¹⁰ environ.

Parmi les moyens de filtrage habituels, on connaît les filtres interférentiels dont la bande passante peut être rendue très étroite avec un nombre suffisant de couches. Mais la bande passante de ces filtres se déplace lorsque l'incidence varie. Or, la surveillance de l'espace dans un très grand angle solide autour d'un véhicule avec un nombre de capteurs acceptable exige que chaque capteur ait un champ élevé difficilement réalisable sous une forme garantissant l'incidence normale pour l'ensemble du flux incident, du moins sous le volume faible qui est souhaitable.

La présente invention vise à fournir un capteur de rayonnement ultra-violet dans la plage d'absorption solaire (200 à 290 nm), pouvant avoir un champ angulaire important, ayant une sélectivité permettant de déceler un départ d'engin même dans des conditions d'ensoleillement intense. Dans ce but, l'invention propose notamment un capteur qui comprend un détecteur à photo multiplicateur ayant une réponse sélective dans l'ultra-violet et un ensemble de filtrage optique placé devant le détecteur, conforme à la revendication 1.

Une telle constitution de l'ensemble de filtrage optique permet de réduire la fraction du spectre optique audelà de 300 nm qui atteint le capteur et qui se trouve dans la zone de sensibilité résiduelle de ce dernier de façon que l'atténuation, comparée à celle dans la plage 200-300 nm, soit d'au moins 10⁻¹⁰.

Le filtre en verre teinté a essentiellement pour fonction de bloquer le spectre visible, à partir d'une longueur d'onde de coupure qui est généralement d'environ 400 nm. Il reste alors à bloquer le flux lumineux entre le bord de la plage d'absorption par l'ozone et 400 nm environ.

Etant donné la non-disponibilité de composants qui tout à la fois présentent une absorption intense dans cette zone et une transparence suffisante au-dessous de 290 nm, l'ensemble de filtrage optique comporte au moins deux organes différents. Le premier est constitué par un cristal permettant de réduire la largeur de la bande spectrale qui reste à bloquer par des moyens complémentaires. On peut avantageusement utiliser une lame à faces parallèles de cristal de sulfate de nickel hexahydraté, ayant une épaisseur de quelques millimètres à quelques dizaines de millimètres. Ce cristal présente une bande d'absorption centrée à 395 nm et il est transparent dans l'ultra-violet.

Enfin, les moyens complémentaires d'absorption sélective d'énergie entre 290 et 340 nm peuvent avoir diverses constitutions, qui seront préférées suivant que l'on privilégie la facilité de fabrication, l'encombrement, le coût ou l'atténuation.

Une première solution consiste à utiliser un filtre interférentiel. Mais un tel filtre a une bande de blocage qui est fonction de l'angle d'incidence du rayonnement. En conséquence, il ne pourra être utilisé qu'à condition que l'incidence en chaque point du filtre reste proche de la normale. Cela implique soit de déposer le filtre interférentiel sur une surface ayant une courbure appropriée, soit de munir le capteur d'une optique télécentrique.

Dans un autre mode de réalisation, plus avantageux lorsque l'on recherche un encombrement réduit, le filtre complémentaire peut être constitué par une plaque de matériau céramique-métal constituée d'un mélange d'atomes métalliques avec un diélectrique, les particules métalliques ayant une dimension telle que la plaque se comporte, pour l'application prévue ici, en filtre passe bas, par suite d'un phénomène de résonnance.

L'invention sera mieux comprise à la lecture de la description qui suit de modes particuliers de réalisation donnés à titre d'exemples non limitatifs. La description se réfère aux dessins qui l'accompagnent, dans lesquels :
- la figure 1 est un diagramme donnant, pour des composants utilisables dans un capteur suivant l'invention, la transparence (en échelle logarithmique) en fonction de la longueur d'onde ;
- la figure 2 montre une répartition possible des composants du capteur le long de l'axe optique, lorsque l'ensemble comporte un filtre interférentiel et une optique télécentrique ;
- la figure 3, similaire à la figure 2, montre une constitution possible lorsque l'ensemble de filtrage comporte un composite céramique-métal.

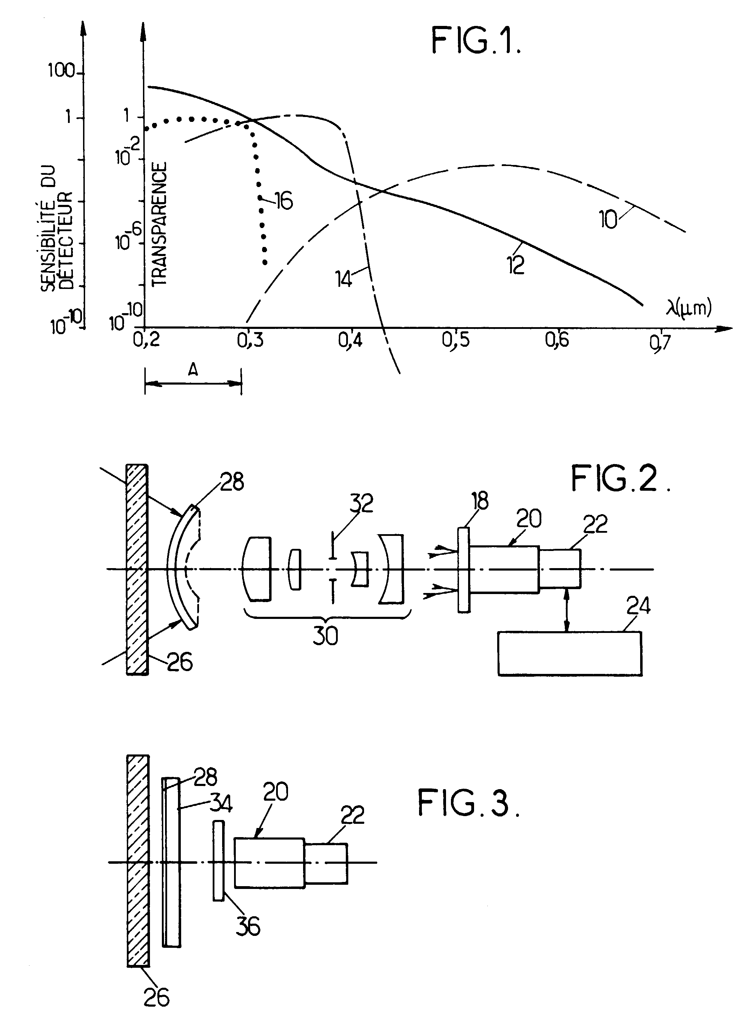

Avant de décrire divers modes de réalisation possible du dispositif, il peut être utile de rappeler que l'énergie du spectre d'émission solaire présente une répartition du genre donné par la courbe en tirets 10 sur la figure 1, avec un maximum vers 550 nm. Mais l'absorption par l'ozone réduit à une valeur très faible l'énergie qui atteint la terre dans la plage A, allant de 200 à 290 nm environ. C'est dans cette plage que l'on cherche à détecter les sources de rayonnement ultraviolet.

Pour cela, on utilise un détecteur, dit "solar blind" ayant une sensibilité qui est élevée dans l'ultraviolet et décroît rapidement vers le spectre visible, avec une longueur d'onde de coupure d'environ 300 nm. Mais la sensibilité résiduelle au-delà de 290 nm reste trop élevée pour que le signal dû à l'émission solaire soit inférieur au bruit de fond du détecteur, de sorte qu'un filtre doit être prévu en amont du détecteur sur le trajet du rayonnement.

Parmi les détecteurs utilisables, on peut notamment citer divers photo-multiplicateurs disponibles dans le commerce, dont la courbe de réponse sensibilité-longueur d'onde à l'allure donnée par la courbe 12 en traits pleins sur la figure 1. Ce photo-multiplicateur peut être suivi d'un capteur choisi en fonction de l'application envisagée. Ce capteur peut notamment être du type matriciel, tel qu'une caméra CCD.

Il n'est pas possible d'obtenir l'absorption nécessaire au-delà de 300 nm tout en conservant une transparence suffisante en deçà de 300 nm avec un élément optique unique. En revanche les différentes combinaisons qui seront maintenant exposées permettent d'atteindre ce résultat.

Un premier élément de filtrage est constitué par une lame à faces parallèles en verre teinté dans la masse, le colorant du verre étant choisi de façon à donner une transparence élevée au moins dans une fraction de la plage 200-300 nm et d'avoir une absorption qui décroit rapidement au-delà. On peut notamment utiliser des verres fabriqués par la Société Schott et vendus sous les références UG5 et UG11. Ces verres permettent de bloquer pratiquement la totalité du spectre visible avec des taux de réjection dépassant 10⁻¹². La courbe en traits mixtes 14 de la figure 1 montre la variation de la transparence en fonction de la longueur d'onde pour un tel verre.

L'ensemble détecteur-lame en verre teinté permet d'éliminer de façon satisfaisante le rayonnement au-delà de 400 nm environ. En revanche, il reste nécessaire de bloquer encore le rayonnement entre le point de coupure désiré, vers 290 nm, et 400 nm environ (cette dernière limite dépendant du verre choisi).

Un second élément optique permettant de participer à ce résultat peut être constitué par une lame en un cristal transparent dans l'ultraviolet et ayant une bande d'absorption centrée dans la zone 290-400 nm. On peut notamment utiliser un cristal de sulfate de nickel hexahydraté, qui présente une bande d'absorption centrée à 395 nm. La caractéristique d'absorption d'un tel cristal est du genre montré par la courbe 16 sur la figure 1. Des lames d'un tel cristal sont disponibles dans le commerce sous une épaisseur de 10 à 30 mm, suffisantes dans la quasi-totalité des cas.

L'association du filtre en verre teinté et du NiSO₄ réduit encore considérablement la zone résiduelle à éliminer. Par exemple, l'association d'une lame en UG5 de 8 mm et d'un cristal permet de bloquer quasi-totalement au-delà de 340 nm et donne une transparence élevée en-deçà de 250 nm. L'association de verre UG11 de 2 mm et d'un filtre en NiSO₄ bloque plus complètement encore dans la zone 400-450 nm, mais réduit la plage de transparence élevée à 270-340 nm.

Il reste encore à éliminer l'énergie dans la plage de longueur d'onde comprise entre 290 et 340 nm environ.

On sait déjà que des filtres interférentiels constitués de couches minces alternées de métal et de diélectrique permettent d'obtenir des filtres par des techniques maintenant bien maîtrisées. Mais ces filtres interférentiels présentent l'inconvénient d'avoir une bande passante qui dépend de l'incidence. De plus, ils ont une sélectivité qui se révèle insuffisante dans beaucoup de cas. On peut en revanche, dans la mesure où la lumière à filtrer arrive sous une incidence qui varie peu, utiliser un filtre interférentiel dioptrique ou catadioptrique en matériaux diélectriques.

La nécessité d'une incidence proche de la normale se traduit, dans le cas d'un dispositif qui doit avoir un grand angle de vision, par la nécessité soit de déposer le filtre interférentiel (ou les filtres interférentiels) sur une surface courbe, ce qui complique la réalisation de l'objectif, soit de faire précéder le filtre d'une optique télécentrique qui garantit des incidences proches de la normale lorsque le filtre interférentiel est près du détecteur.

Une solution qui sera souvent préférable consiste à utiliser un filtre en cermet (céramique-métal), constitué par une couche d'épaisseur de l'ordre du micron, en un mélange d'atomes métalliques avec un diélectrique, obtenu par coévaporation ou copulvérisation. De telles couches se comportent en filtre passe-bas pour l'application envisagée : il semble que l'absorption soit due à l'excitation par la lumière d'un mode d'oscillation collective des électrons de conduction du métal confinés dans les grains métalliques. La bande passante dépend de la fréquence de plasma du métal, de la constante diélectrique de la matrice et de la fraction de volume occupées par les grains métalliques dans l'échantillon. Un tel filtre est déposé sur un substrat transparent. Il est opaque dans la région de la bande d'absorption "anormale" et transparente en dehors de cette région. La bande d'absorption sera essentiellement ajustée par un choix appropriée de la taille des grains, toujours nettement inférieure à la longueur d'onde à absorber. La teneur en métal sera toujours faible, de quelques pour-cent. Un avantage important d'un tel filtre est que la plage d'absorption est insensible à l'angle d'incidence sur la couche, étant donné que le phénomène mis en oeuvre est volumique.

En particulier, il est possible de réaliser un filtre passe-bas ayant une fréquence de coupure entre 280 et 300 nm, une dynamique de coupure très élevée à partir de 290 nm environ et une transparence dépassant 30% en-deçà de 250 nm en utilisant un filtre de quelques dizaines de nanomètres d'épaisseur, en cermet Mg-MgF2 ou en cermet Al-Al2O3, à quelques pour-cent de magnésium ou d'aluminium.

La figure 2 montre un premier mode possible de réalisation du dispositif, utilisant un filtre final interférentiel 18, qui exige la présence d'une optique télécentrique en amont. Ce filtre peut précéder immédiatement le détecteur 20, constitué par exemple par un photo-multiplicateur associé à une caméra CCD 22. Cette caméra peut être du type matriciel et reliée à une électronique 24 de commande et d'exploitation du signal.

La partie optique du dispositif comporte un filtre 26 en verre coloré dans la masse, constitué, dans le cas représenté, par une lame à faces parallèles pouvant avoir une épaisseur de l'ordre du centimètre. La lame 26 peut être suivie du filtre 28 en NiSO₄. Le filtre 28 est représenté sous forme d'une lame courbe à faces parallèles. Il pourrait également constituer la lentille frontale du système télécentrique, comme indiqué en tirets. Etant donné qu'une faible épaisseur suffit au filtrage, on se bornera généralement à utiliser une lame à faces parallèles. Les faces de cette lame peuvent être revêtues pour la protéger contre l'humidité.

Enfin, l'optique télécentrique 30 peut avoir une constitution classique et comporter plusieurs groupes de lentilles séparés par un diaphragme 32. L'utilisation d'une telle optique permet de réduire très considérablement la plage d'incidence sur le filtre interférentiel 18.

Dans le mode de réalisation montré en figure 3 (où les organes correspondant à ceux de la figure 2 sont désignés par le même numéro de référence) le filtre en verre coloré 26 est suivi de la lame plane à faces parallèles 28 en cristal, pouvant être placé sur un support 34. Le filtre à cermet 36 précède le détecteur qui comporte un photo-multiplicateur suivi d'une caméra CCD 22. Le photo-multiplicateur peut notamment utiliser une photocathode en CsTe ou RbTe sensible dans l'ultraviolet.

## Revendications

1. Capteur sélectif de rayonnement ultra-violet dans la plage d'absorption solaire, comprenant un détecteur à photo multiplicateur ayant une réponse sélective dans l'ultra-violet et un ensemble de filtrage optique ayant une réponse sélective dans l'ultra-violet placé devant le détecteur, ledit ensemble comprenant :
- un filtre en verre teinté dans la masse de blocage du rayonnement dans le domaine visible du spectre,
- un filtre en un cristal présentant une bande d'absorption intense au moins au-delà de 340 nm, s'étendant au moins jusqu'à 400 nm, et
- un filtre complémentaire d'absorption sélective d'énergie dans une plage allant au moins de 300 nm à 340 nm.

2. Capteur selon la revendication 1, caractérisé en ce que le filtre complémentaire est constitué par une plaque de céramique-métal de 500 nm à 5 microns d'épaisseur, constituée par un mélange de particules de métal, tel que l'aluminium, et d'un diélectrique tel que l'alumine, la dimension des particules métalliques étant telle que la plaque provoque un blocage au-delà de 300 nm.

3. Capteur selon la revendication 2, caractérisé en ce que le métal est l'aluminium et le diélectrique est de l'alumine, la proportion d'aluminium étant de quelques pour-cent.

4. Capteur selon la revendication 2, caractérisé en ce que le métal est le magnésium et le diélectrique est le fluorure de magnésium, la proportion de magnésium étant de quelques pour-cent.

5. Capteur suivant la revendication 1, caractérisé en ce que le filtre complémentaire est constitué par un filtre interférentiel travaillant sous incidence proche de la normale, déposé sur une surface courbe ou précédé d'une optique télécentrique.

6. Capteur selon l'une quelconque des revendications précédentes, caractérisé en ce que le cristal de filtrage est un cristal de sulfate de nickel hexahydraté, ayant une épaisseur comprise entre 8 et 100 mm.

7. Capteur selon l'une quelconque des revendications précédentes, caractérisé en ce que le filtre en verre teinté est constitué par un filtre en verre de Wood.

8. Capteur selon l'une quelconque des revendications précédentes, caractérisé en ce que le détecteur est constitué par un intensificateur de lumière suivi d'une caméra CCD, ou un photomultiplicateur.

9. Capteur selon l'une quelconque des revendications précédentes, caractérisé en ce que les filtres en verre teinté et en cristal sont à faces parallèles ou constituent des lentilles.

## Patentansprüche

1. Trennscharfer UV-Empfänger für den solaren Absorptionsbereich, der einen Photovervielfacher-Detektor, welcher ein selektives Ansprechen im Ultravioletten aufweist, und eine optische Filteranordnung, die ein selektives Ansprechen im Ultravioletten aufweist, welche vor dem Detektor angeordnet ist, umfaßt, wobei die Anordnung umfaßt:
einen Filter aus Buntglas zum Blockieren der Strahlung im sichtbaren Bereich des Spektrums,
einen Filter aus einem Kristall, der ein intensives Absorptionsband von mindestens 340 nm, das sich bis mindestens 400 nm erstreckt, aufweist, und
einen Komplementärfilter zur selektiven Absorption von Energie in einem Bereich, der von mindestens 300 nm bis 340 nm geht.

2. Empfänger nach Anspruch 1, **gekennzeichnet dadurch**, **daß** der Komplementärfilter aus einer Scheibe Metallkeramik mit einer Dicke von 500 nm bis 5 Mikrometer, die aus einem Gemisch aus Metallteilchen, wie Aluminium, und Dielektrikumteilchen, wie Aluminiumoxid, besteht, wobei die Dimensionen der metallischen Teilchen so sind, daß die Scheibe ein Blockieren über 300 nm hinaus herbeiführt.

3. Empfänger nach Anspruch 2, **gekennzeichnet dadurch**, **daß** das Metall Aluminium ist und das Dielektrikum Aluminiumoxid, wobei der Anteil an Aluminium einige Prozent beträgt.

4. Empfänger nach Anspruch 2, **gekennzeichnet dadurch, daß** das Metall Magnesium und das Dielektrikum Magnesiumfluorid ist, wobei der Anteil an Magnesium einige Prozent beträgt.

5. Empfänger nach Anspruch 1, **gekennzeichnet dadurch, daß** der Komplementärfilter aus einem Interferenzfilter besteht, der unter einem Einfall nahe dem Einfallsort arbeitet, wobei er auf einer gekrümmten Oberfläche angeordnet oder einer telezentrischen Optik nachgeschaltet ist.

6. Empfänger nach einem der vorangegangenen Ansprüche, **gekennzeichnet dadurch, daß** der Filterkristall ein Kristall aus Nickelsulfathexahydrat ist, der eine Dicke zwischen 8 und 100 mm besitzt.

7. Empfänger nach einem der vorangegangenen Ansprüche, **gekennzeichnet dadurch, daß** der Buntglasfilter aus einem Schwarzglasfilter besteht.

8. Empfänger nach einem der vorangegangenen Ansprüche, **gekennzeichnet dadurch**, daß der Detektor aus einem Lichtverstärker, der von einer CCD-Kamera gefolgt wird, oder einem Photovervielfacher besteht.

9. Empfänger nach einem der vorangegangenen Ansprüche, **gekennzeichnet dadurch**, **daß** die Buntglas- und Kristallfilter parallele Stirnseiten aufweisen oder aus Linsen bestehen.

## Claims

1. A selective sensor of ultraviolet radiation in the solar absorption range, comprising a photomultiplier detector having a selective response in the ultraviolet and an optical filter assembly having a selective response in the ultraviolet and placed in front of the detector, the assembly comprising:
- a glass filter dyed in the mass for blocking radiation in the visible range of the spectrum,
- a crystal filter having an intense absorption band at least beyond 340 nm and extending at least as far as 400 nm, and
- a complementary filter for selective absorption of energy in a range extending at least from 300 nm to 340 nm.

2. A sensor according to claim 1, characterised in that the complementary filter is a ceramic-metal sheet between 500 nm and 5 microns thick and made of particles of metal such as aluminium mixed with a dielectric such as alumina, the size of the metal particles being such that the sheet causes blocking beyond 300 nm.

3. A sensor according to claim 2, characterised in that the metal is aluminium and the dielectric is alumina, the proportion of aluminium being a few percent.

4. A sensor according to claim 2, characterised in that the metal is magnesium and the dielectric is magnesium fluoride, the proportion of magnesium being a few percent.

5. A sensor according to claim 1, characterised in that the complementary filter is an interference filter operating at near-normal incidence and deposited on a curved surface or preceded by a telecentric optical system.

6. A sensor according to any of the preceding claims, characterised in that the filter crystal is a crystal of nickel sulphate hexahydrate having a thickness between 8 and 100 mm.

7. A sensor according to any of the preceding claims, characterised in that the dyed glass filter is a Wood glass filter.

8. A sensor according to any of the preceding claims, characterised in that the detector is a light intensifier followed by a CCD camera or a photomultiplier.

9. A sensor according to any of the preceding claims, characterised in that the dyed glass filter and the crystal filter have parallel surfaces or form lenses.
